# EUROPEAN PATENT APPLICATION

(11) **EP 4 852 382 A1**
(43) Date of publication of application: **09.12.2026**
(21) Application number: 25747946.9
(22) Date of filing: 26.01.2025
(51) Int. Cl.: H04L 27/26

(54) **SIGNAL SENDING METHOD, SIGNAL RECEIVING METHOD, APPARATUSES, TERMINAL AND NETWORK SIDE DEVICE**

(30) Priority: 30.01.2024 CN 202410137504
(71) Applicant: Vivo Mobile Communication Co., Ltd., Dongguan, Guangdong 523863 (CN)
(72) Inventor: WANG, Yi, Dongguan, Guangdong 523863 (CN); QU, Xin, Dongguan, Guangdong 523863 (CN); LI, Dongru, Dongguan, Guangdong 523863 (CN); PAN, Xueming, Dongguan, Guangdong 523863 (CN); CAI, Jiansheng, Dongguan, Guangdong 523863 (CN)
(74) Representative: dompatent
(86) International application number: PCT/CN2025/075202
(87) International publication number: WO 2025/162382

(57) **Abstract**

The present application belongs to the technical field of communications. Disclosed are a signal sending method, a signal receiving method, apparatuses, a terminal and a network side device. The signal sending method in the embodiments of the present application comprises : a network side device sends a first signal, the first signal at least comprising a complex signal sequence, and the complex signal sequence bearing information, or the complex signal sequence and the time position of the complex signal sequence bearing information, or the complex signal sequence and an on-off keying signal bearing information.

## Description

### CROSS-REFERENCE TO RELATED APPLICATIONS

This application claims priority to Chinese Patent Application No. 202410137504.1 filed on January 30, 2024, which is incorporated herein by reference in its entirety.

### TECHNICAL FIELD

This application relates to the field of communication technologies, and in particular, to a signal sending method and apparatus, a signal receiving method and apparatus, a terminal, and a network side device.

### BACKGROUND

To reduce power consumption, a low-power receiver is introduced into a terminal in the related art and is configured to trigger wake-up of a main communication module by detecting a low-power wake-up signal. A modulation mode for the low-power wake-up signal may be optionally an on-off keying (On-Off Keying, OOK) signal in combination with an orthogonal frequency division multiplex (Orthogonal Frequency Division Multiplex, OFDM) sequence for being applicable to terminals with different receiver capabilities. However, how to use a low-power signal to carry information has not been determined at present.

### SUMMARY

Embodiments of this application provide a signal sending method and apparatus, a signal receiving method and apparatus, a terminal, and a network side device, which can resolve a problem of how to use a low-power signal to carry information.

According to a first aspect, a signal sending method is provided and performed by a network side device. The method includes:
the network side device sends a first signal. The first signal includes at least a complex signal sequence, the complex signal sequence carries information, or the complex signal sequence and a time position of the complex signal sequence carry information, or the complex signal sequence and an on-off keying signal carry information.

According to a second aspect, a signal receiving method is provided and performed by a terminal. The method includes:
the terminal receives a first signal; and
the terminal determines information carried by the first signal based on first information. The first information includes any one of the following: a complex signal sequence in the first signal, the complex signal sequence in the first signal and a time position of the complex signal sequence, and a complex signal sequence and an on-off keying signal in the first signal.

According to a third aspect, a signal sending apparatus is provided, applied to a network side device and including:
a first sending module, configured to send a first signal. The first signal includes at least a complex signal sequence, the complex signal sequence carries information, or the complex signal sequence and a time position of the complex signal sequence carry information, or the complex signal sequence and an on-off keying signal carry information.

According to a fourth aspect, a signal sending apparatus is provided, applied to a terminal and including:
a receiving module, configured to receive a first signal; and
a determining module, configured to determine, based on first information, information carried by the first signal. The first information includes any one of the following: a complex signal sequence in the first signal, the complex signal sequence in the first signal and a time position of the complex signal sequence, and a complex signal sequence and an on-off keying signal in the first signal.

According to a fifth aspect, a terminal is provided. The terminal includes a processor and a memory. The memory stores a program or instructions executable in the processor. The program or the instructions, when executed by the processor, implement the steps of the method according to the second aspect.

According to a sixth aspect, a terminal is provided, including a processor and a communication interface. The communication interface is configured to receive a first signal, and the processor is configured to determine, based on first information, information carried by the first signal. The first information includes any one of the following: a complex signal sequence in the first signal, the complex signal sequence in the first signal and a time position of the complex signal sequence, and a complex signal sequence and an on-off keying signal in the first signal.

According to a seventh aspect, a network side device is provided. The network side device includes a processor and a memory. The memory stores a program or instructions executable on the processor. The program or the instructions, when executed by the processor, implement the steps of the method according to the first aspect.

According to an eighth aspect, a network side device is provided, including a processor and a communication interface. The communication interface is configured to send a first signal. The first signal includes at least a complex signal sequence, the complex signal sequence carries information, or the complex signal sequence and a time position of the complex signal sequence carry information, or the complex signal sequence and an on-off keying signal carry information.

According to a ninth aspect, a readable storage medium is provided. The readable storage medium stores a program or instructions. The program or instructions, when executed, cause a processor to implement the steps of the method according to the first aspect or the steps of the method according to the second aspect.

According to a tenth aspect, a wireless communication system is provided. The wireless communication system includes a terminal and a network side device. The network side device may be configured to perform the steps of the method according to the first aspect. The terminal may be configured to perform the steps of the method according to the second aspect.

According to an eleventh aspect, a chip is provided. The chip includes a processor and a communication interface. The communication interface is coupled to the processor. The processor is configured to run a program or instructions to implement the steps of the method according to the first aspect or the steps of the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

According to a thirteenth aspect, a network side device is provided. The network side device is configured to perform the steps of the method according to the first aspect.

According to a fourteenth aspect, a terminal is provided. The terminal is configured to perform the steps of the method according to the second aspect.

In embodiments of this application, by using a complex signal sequence included n a first signal (for example, a low-power signal), the low-power signal may be used to carry information.

### BRIEF DESCRIPTION OF THE DRAWINGS

FIG. 1 is a block diagram of a wireless communication system to which embodiments of this application may be applied;
FIG. 2 is a schematic diagram of an architecture of a low-power receiver according to an embodiment of this application;
FIG. 3 is a flowchart of a signal sending method according to an embodiment of this application;
FIG. 4 is a flowchart of a signal receiving method according to an embodiment of this application;
FIG. 5 is a schematic diagram 1 of an information carrying manner according to an embodiment of this application;
FIG. 6 is a schematic diagram 2 of an information carrying manner according to an embodiment of this application;
FIG. 7 is a schematic diagram 3 of an information carrying manner according to an embodiment of this application;
FIG. 8 is a schematic diagram 4 of an information carrying manner according to an embodiment of this application;
FIG. 9 is a schematic diagram 5 of an information carrying manner according to an embodiment of this application;
FIG. 10 is a schematic diagram 6 of an information carrying manner according to an embodiment of this application;
FIG. 11 is a schematic diagram 7 of an information carrying manner according to an embodiment of this application;
FIG. 12 is a schematic diagram 8 of an information carrying manner according to an embodiment of this application;
FIG. 13 is a schematic diagram 9 of an information carrying manner according to an embodiment of this application;
FIG. 14 is a schematic diagram 10 of an information carrying manner according to an embodiment of this application;
FIG. 15 is a schematic structural diagram of a signal sending apparatus according to an embodiment of this application;
FIG. 16 is a schematic structural diagram of another signal sending apparatus according to an embodiment of this application;
FIG. 17 is a schematic structural diagram of a communication device according to an embodiment of the disclosure;
FIG. 18 is a schematic structural diagram of a terminal according to an embodiment of this application; and
FIG. 19 is a schematic structural diagram of a network side device according to an embodiment of this application.

### DETAILED DESCRIPTION

Technical solutions in embodiments of this application are clearly described below with reference to the drawings in embodiments of this application. Apparently, the described embodiments are some rather than all of embodiments of this application. All other embodiments obtained by a person of ordinary skill in the art based on embodiments of this application fall within the protection scope of this application.

Terms "first", "second", and the like in this application are used to distinguish between similar objects, rather than describing a specific order or sequence. It should be understood that the terms used in this way may be transposed where appropriate, so that embodiments of this application can be implemented in a sequence other than those illustrated or described herein. In addition, objects defined by "first" and "second" are generally of the same class, and a number of the objects is not limited. For example, one or more first objects may be arranged. In addition, "or" in this application indicates at least one of connected objects. For example, "A or B" encompasses three solutions: solution 1: A is included, but B is not included; solution 2: B is included, but A is not included; and solution 3: both A and B are included. The character "/" generally indicates that related objects are in an "or" relationship.

The term "instruction" in this application may be a direct instruction (or an explicit instruction) or an indirect instruction (or an implicit instruction). The direct indication may be understood as that a sending party clearly informs a receiving party of specific information, an operation to be performed, or a request result in a sent indication. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. Terms "system" and "network" in embodiments of this application are usually used interchangeably, and the described technology may be used for both the system and the radio technology mentioned above, or may be used for another system and another radio technology. The following description describes a new radio (New Radio, NR) system for exemplary purposes, and the term NR is used in most of the following description. Nevertheless, these technologies may also be applied in a system other than the NR system, such as a 6^{th} generation (6^{th} Generation, 6G) communication system.

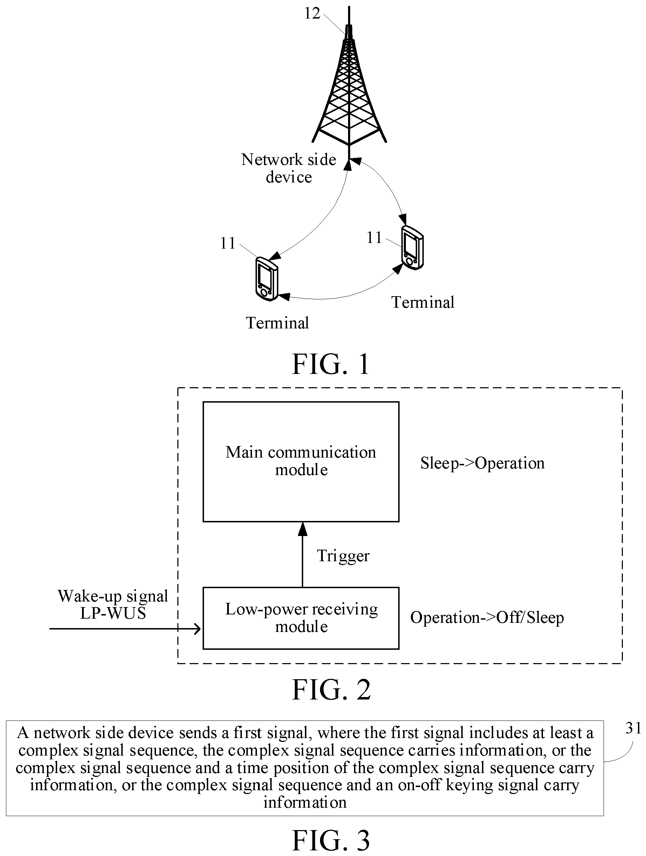

FIG. 1 is a block diagram of a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), an on-board device (Vehicle User Equipment, VUE), a ship-borne device, a pedestrian user equipment (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smartwatch, a smart band, a smart headset, smart glasses, smart jewelry (a smart bangle, a smart bracelet, a smart ring, a smart necklace, a smart anklet, a smart leglet, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term.

For ease of understanding embodiments of this application, the following content is first described.

In embodiments of this application, a basic working principle of a low-power receiver (low power wake up receiver, LP WUR) is as follows: as shown in FIG. 2, a terminal (a receiving end) includes a main communication module and a low-power receiving module (that is, a low-power receiver), the main communication module is configured to receive and send mobile communication data, and the low-power receiving module is configured to receive a low-power wake-up signal (low power wake up signal, LP-WUS). The terminal in an energy-saving state turns on the low-power receiving module to monitor the LP-WUS and turns off the main communication module. When downlink data arrives, a wake-up signal is sent to the terminal through a network. After monitoring the wake-up signal through the low-power receiving module, the terminal triggers, through a series of determinations, the main communication module to switch from an off state to an on state. In this case, the low-power receiving module enters an off state from an operating state. The low-power receiving module may be continuously or discontinuously enabled. When enabled, the low-power receiving module may receive the low-power wake-up signal.

Low-power receivers may be classified into a plurality of types, for example, a first type of low-power receivers and a second type of low-power receivers. The first type of low-power receivers has a capability to demodulate a first type of a waveform and does not have a capability to demodulate a second type of a waveform. The second type of low-power receivers has a capability to demodulate the second type of a waveform, and may have a capability to demodulate the first type of a waveform, or may not have the capability to demodulate the first type of a waveform. For example, the first type of a waveform is an OOK signal waveform, and the second type of a waveform is an orthogonal frequency division multiplex (Orthogonal frequency division multiplex, OFDM) signal waveform.

The low-power receivers may have structures which are classified into multiple types, such as, a receiver based on radio frequency envelope detection, a receiver based on intermediate frequency envelope detection, or a receiver based on a zero-frequency baseband envelope detection. The low-power receivers of these structures generally have low power consumption and may be configured to at least demodulate an on-off keying signal. In addition, these low-power receivers may be added with a module configured to demodulate a frequency-shift keying (frequency-shift keying, FSK) signal to support FSK signal demodulation. A low-power receiver that supports OFDM signal detection has a structure in which at least some modules are different from those in the structure of the foregoing receiver, and signal processing may be sequence-related processing. The power consumption of the low-power receiver with this architecture is higher than the power consumption of the foregoing receiver, but is lower than the power consumption of the main receiver.

Optionally, different types of low-power receivers may monitor different signals. For example, the signal monitored by the first type of low-power receivers is a signal based on an OOK waveform, which may include a wake-up signal LP-WUS based on the OOK waveform and a synchronization signal LP-SS based on the OOK waveform. The signal monitored by the second type of low-power receivers includes at least a signal based on an OFDM waveform, for example, a wake-up signal LP-WUS based on OFDM. The OFDM signal is an OFDM sequence modulated on an OOK signal. The signal monitored by the foregoing second type of low-power receivers may also include an OFDM-based synchronization signal, such as a primary synchronization signal (Primary Synchronization Signal, PSS), a secondary synchronization signal (Secondary Synchronization Signal, SSS), or the like.

The signal sending method and apparatus, the signal receiving method and apparatus, the terminal, and the network side device provided in embodiments of this application are described in detail below through some embodiments and application scenarios thereof with reference to the accompanying drawings.

Refer to FIG. 3. FIG. 3 is a flowchart of a signal sending method according to an embodiment of this application. The method is performed by a network side device. As shown in FIG. 3, the method includes the following steps:
Step 31: A network side device sends a first signal; where the first signal includes at least a complex signal sequence, the complex signal sequence carries information, or the complex signal sequence and a time position of the complex signal sequence carry information, or the complex signal sequence and an on-off keying signal carry information.

In embodiments of this application, the first signal is a low-power signal and received by a low-power receiver. For example, the first signal may optionally be a low-power wake-up signal LP-WUS, a synchronization signal LP-SS based on an OOK waveform, or the like.

Optionally, a type of the low-power receiver may include at least one of the following:
a receiver capable of demodulating the on-off keying signal, but incapable of detecting the complex signal sequence, for example, the foregoing first type of low-power receivers, and
a receiver capable of detecting a complex signal sequence, for example, the foregoing second type of low-power receivers.

Optionally, the complex signal sequence is, for example, an OFDM sequence or the like, where carried information is, for example, load information and/or cyclic redundancy check (Cyclic Redundancy Check, CRC) information generated based on the load information.

Therefore, through the complex signal sequence included in the first signal (such as a low-power signal), it may be implemented that information is carried by the low-power signal, thereby improving transmission efficiency.

Optionally, if the first signal further includes an on-off keying signal (such as an OOK signal), the complex signal sequence is a sequence modulated on an ON symbol of the on-off keying signal (OOK ON symbol). For example, this OOK ON symbol may also be represented as an OOK ON chip.

Optionally, a time resource of the first signal may include one or more first time units, the first time unit includes one or more OFDM symbols, or the first time unit includes one or more on-off keying signal symbols (OOK symbols). The OOK symbol may be an OOK on symbol, or may be an off symbol OOK on symbol of an on-off keying signal. For example, the OOK symbol may also be represented as an OOK chip.

Optionally, the time resource of the first signal may include one or more first time units, and the first time unit carries some or all information of the first signal. For example, one first time unit may carry all information of the first signal. In this case, all information of the first signal may be repeatedly transmitted in a plurality of first time units (such as two or three first time units). Alternatively, a plurality of first time units may together carry all information of the first signal.

Optionally, the time resource of the first signal includes a plurality of first time units. A relationship between a bit position of information carried by a complex signal sequence in the first time unit and a bit position of information carried by a time position of the complex signal sequence or the information carried by the on-off keying signal is determined based on a position of the first time unit in the plurality of first time units. In other words, for a first time unit in a plurality of first time units, based on a position of the first time unit in the plurality of first time units, a relationship between a bit position of information carried by a complex signal sequence in the first time unit and a bit position where information carried by a time position of the complex signal sequence is located may be determined, or a relationship between the bit position where the information carried by the complex signal sequence in the first time unit is located and a bit position where information carried by an on-off keying signal is located may be determined. In this way, it may be facilitated that a terminal determines information carried in a first signal received thereby.

Optionally, a number of complex signal sequences that the first signal is capable of carrying is N, and one of the N complex signal sequences is sent in a second time unit, and N is an integer greater than or equal to 1; and the second time unit is any one of the following: an OFDM symbol, a partial OFDM symbol, an OOK symbol, or an ON symbol of the on-off keying signal (OOK ON symbol). For example, if the first signal occupies 4 second time units, such as 4 OFDM symbols, one complex signal sequence may be sent in each OFDM symbol, and the complex signal sequence is a complex signal sequence selected from the N complex signal sequences.

Optionally, a maximum number of bits carried by the complex signal sequence in the second time unit is log2(N). For example, if N is equal to 4, the maximum number of bits carried by the complex signal sequence in the second time unit is 2.

Optionally, the first time unit includes one or more second time units, and a number of bits carried in the first time unit may satisfy any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

Optionally, if the first time unit carries all bit information of the first signal, all bit information of the first signal may be load information carried by the first signal, or all bit information of the first signal includes the load information carried by the first signal and CRC generated based on the load information.

Optionally, the information carried by the complex signal sequence in the first signal may be the load information carried by the first signal; or the information carried by the complex signal sequence in the first signal includes the load information carried by the first signal and the CRC generated based on the load information;
or the information carried by the complex signal sequence in the first signal and the time position of the complex signal sequence may be the load information carried in the first signal; or the information carried by the complex signal sequence in the first signal and the time position of the complex signal sequence includes the load information carried by the first signal and the CRC generated based on the load information.

Optionally, the signal sending method in this embodiment may further include:
The network side device sends configuration information. The configuration information is used to configure at least one of the following: the information carried by the complex signal sequence, the information carried by the complex signal sequence and the time position of the complex signal sequence, and the information carried by the complex signal sequence and the on-off keying signal. In this way, it may be convenient for a terminal to successfully detect information.

Optionally, the first signal may correspond to a single transmission or a plurality of transmissions. In other words, the first signal may carry information for a single transmission or a plurality of transmissions. In this way, transmission efficiency may be improved by a plurality of corresponding transmissions.

Optionally, when the first signal corresponds to the plurality of transmissions, only part or all information of the single transmission may be carried in the first time unit or the second time unit, or part or all information of the plurality of transmissions is carried in the first time unit or the second time unit.

Optionally, the complex signal sequence in the first signal may include, but is not limited to, a complex sequence determined based on at least one of the following: an M sequence, a ZC sequence, a gold sequence, and a constant amplitude zero auto-correlation (Constant Amplitude Zero Auto Correlation, CAZAC) sequence.

Optionally, the complex signal sequence in the first signal may include, but is not limited to, a sequence determined based on a real sequence or a complex sequence generated (for example, by an operation such as multiplication, which is not limited herein) based on at least two of the following: the M sequence, the ZC sequence, the gold sequence, and the CAZAC sequence.

It should be noted that the M sequence or the gold sequence may be represented in a unipolar manner, for example, a value of each element of 0 or 1, or may be represented in a bipolar manner, for example, a value of each element of ±1. Preferably, the multiplication of the two sequences may be a Kronecker product of the two sequences. For example, a sequence is a ZC sequence with a length of 12, and the other sequence is [1 1 1]. After the Kronecker product, the two sequences are changed into a complex sequence with a length of 36. The complex sequence may be a sequence subjected to upsampling.

Optionally, the complex signal sequence in the first signal may be generated based on a constellation point corresponding to at least one of the following modulation modes: binary phase shift keying (Binary Phase Shift Keying, BPSK), pi/2 BPSK, quadrature phase shift keying (Quadrature Phase Shift Keying, QPSK), 16 quadrature amplitude modulation (Quadrature Amplitude Modulation, QAM), 64QAM, 256QAM, 1024QAM, 4096QAM, or the like. A specific generation manner may be determined based on a requirement, which is not limited.

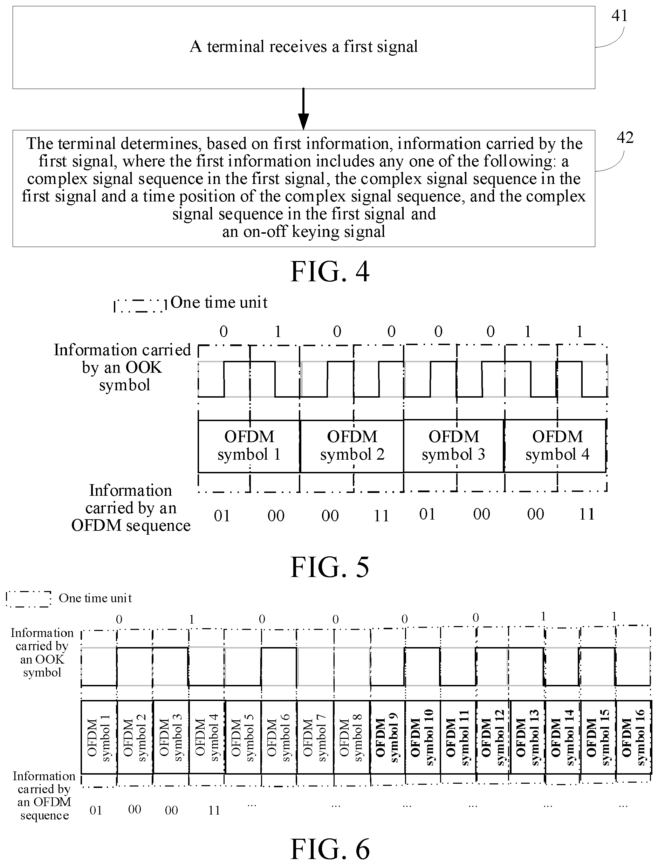

Refer to FIG. 4. FIG. 4 is a flowchart of a signal receiving method according to an embodiment of this application. The method is performed by a terminal. As shown in FIG. 4, the method includes the following steps:
Step 41: A terminal receives a first signal.

Step 42: The terminal determines, based on first information, information carried by the first signal. The first information includes any one of the following: a complex signal sequence in the first signal, the complex signal sequence in the first signal and a time position of the complex signal sequence, and a complex signal sequence and an on-off keying signal in the first signal.

In embodiments of this application, the first signal is a low-power signal and received by a low-power receiver. For example, the first signal may optionally be a low-power wake-up signal LP-WUS, a synchronization signal LP-SS based on an OOK waveform, or the like. The information may also be referred to as information bits.

Optionally, a type of the low-power receiver may include at least one of the following:
a receiver capable of demodulating the on-off keying signal, but incapable of detecting the complex signal sequence, for example, the foregoing first type of low-power receivers, and
a receiver capable of detecting a complex signal sequence, for example, the foregoing second type of low-power receivers.

Optionally, the receiving a first signal may include: the terminal uses a low-power receiver to receive the first signal. For example, the low-power receiver has a capability capable of detecting a complex signal sequence.

Optionally, the complex signal sequence is, for example, an OFDM sequence or the like, where carried information is, for example, load information and/or cyclic redundancy check CRC information generated based on the load information.

Therefore, through the complex signal sequence included in the first signal (such as a low-power signal), it may be implemented that information is carried by the low-power signal, thereby improving transmission efficiency.

Optionally, if the first signal includes an on-off keying signal (such as an OOK signal), the complex signal sequence may be a sequence modulated on an on symbol of the on-off keying signal (OOK ON symbol).

Optionally, a time resource of the first signal may include one or more first time units, the first time unit includes one or more OFDM symbols, or the first time unit includes one or more on-off keying signal symbols (OOK symbols). An OOK symbol may be an OOK on symbol, or may be an off symbol OOK off symbol of an on-off keying signal.

Optionally, the time resource of the first signal may include one or more first time units, and the first time unit carries some or all information of the first signal. For example, one first time unit may carry all information of the first signal. In this case, all information of the first signal may be repeatedly transmitted in a plurality of first time units (such as two or three first time units). Alternatively, a plurality of first time units may together carry all information of the first signal.

Optionally, if the time resource of the first signal includes a plurality of first time units, for a first time unit in a plurality of first time units, based on a position of the first time unit in the plurality of first time units, a relationship between a bit position of information carried by a complex signal sequence in the first time unit and a bit position where information carried by a time position of the complex signal sequence is located may be determined, or a relationship between the bit position where the information carried by the complex signal sequence in the first time unit is located and a bit position where information carried by an on-off keying signal is located may be determined. In this way, it may be facilitated that a terminal determines information carried in a first signal received thereby.

Optionally, if the time resource of the first signal includes a plurality of first time units, the receiving a first signal may include:
the terminal receives the first signal in the plurality of first time units.

The process of determining, based on first information, information carried by the first signal may include:
the terminal determines, based on a position of the first time unit in the plurality of first time units, a first relationship between a bit position where information carried by the complex signal sequence in the first time unit is located and a bit position where information carried by a time position of the complex signal sequence is located, or determining a second relationship between the bit position where the information carried by the complex signal sequence in the first time unit is located and a bit position where information carried by an on-off keying signal is located;
the terminal determines, based on the complex signal sequence in the first time unit and the time position of the complex signal sequence, and the first relationship, the information carried in the first time unit; or determines, based on the complex signal sequence in the first time unit and the on-off keying signal, and the second relationship, the information carried in the first time unit. In this way, it may be facilitated that a terminal determines information carried in a first signal received thereby.

Optionally, a number of complex signal sequences that the first signal is capable of carrying is N, and one of the N complex signal sequences is sent in a second time unit, and N is an integer greater than or equal to 1; and the second time unit is any one of the following: an OFDM symbol, a partial OFDM symbol, an OOK symbol, or an ON symbol of the on-off keying signal (OOK ON symbol). For example, if the first signal occupies 4 second time units, such as 4 OFDM symbols, one complex signal sequence may be sent in each OFDM symbol, and the complex signal sequence is a complex signal sequence selected from the N complex signal sequences.

Optionally, a maximum number of bits carried by the complex signal sequence in the second time unit is log2(N).

Optionally, the first time unit includes one or more second time units, and a number of bits carried in the first time unit may satisfy any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

Optionally, if the first time unit carries all bit information of the first signal, all bit information of the first signal may be load information carried by the first signal, or all bit information of the first signal includes the load information carried by the first signal and CRC generated based on the load information.

Optionally, the information carried by the complex signal sequence in the first signal may be the load information carried by the first signal; or the information carried by the complex signal sequence in the first signal includes the load information carried by the first signal and the CRC generated based on the load information;
or the information carried by the complex signal sequence in the first signal and the time position of the complex signal sequence may be the load information carried in the first signal; or the information carried by the complex signal sequence in the first signal and the time position of the complex signal sequence includes the load information carried by the first signal and the CRC generated based on the load information.

Optionally, the process of determining, based on first information, information carried by the first signal may include: the terminal determines, based on at least one of a network configuration, a protocol agreement, and a predefined rule, the information carried by the first signal based on the first information. In other words, it is determined that the information carried by the first signal is determined based on the complex signal sequence, or the information carried by the first signal is determined based on the complex signal sequence and the time position of the complex signal sequence, or the information carried by the first signal is determined based on the complex signal sequence and an on-off keying signal.

Optionally, the first signal may correspond to a single transmission or a plurality of transmissions. In other words, the first signal may carry information for a single transmission or a plurality of transmissions. In this way, transmission efficiency may be improved by a plurality of corresponding transmissions.

Optionally, when the first signal corresponds to the plurality of transmissions, only part or all information of the single transmission may be carried in the first time unit or the second time unit, or part or all information of the plurality of transmissions is carried in the first time unit or the second time unit.

Optionally, the receiving a first signal may include: the terminal detects a complex signal sequence in the first signal in a second time unit.

The process of determining, based on first information, information carried by the first signal may include any one of the following:
the terminal determines information bits carried in the second time unit based on a detected complex signal sequence;
the terminal determines the information bits carried in the second time unit based on the detected complex signal sequence and the time position of the complex signal sequence; or
the terminal determines the information bit carried in the second time unit based on the detected complex signal sequence and the on-off keying signal.

Optionally, if no complex signal sequence is detected in the second time unit, no information is carried in the second time unit. In other words, a number of information bits is 0.

Optionally, if no complex signal sequence is detected in the second time unit, the second time unit corresponds to an off signal OOK off symbol of an on-off keying signal.

Optionally, if a network side does not configure Manchester coding for the first signal, the determining, based on first information, information carried by the first signal may include: the terminal determines the information carried by the first signal based on a complex signal sequence in the first signal.

Alternatively, if the network side configures the first signal to use the Manchester coding, the determining, based on first information, information carried by the first signal may include: the terminal determines the information carried by the first signal based on the complex signal sequence in the first signal a time position of the complex signal sequence; or determines, based on the complex signal sequence and the on-off keying signal in the first signal, the information carried by the first signal.

Optionally, if the network side does not configure a first time unit, the first time unit may be specifically as described above. The determining, based on first information, information carried by the first signal may include: the terminal determines the information carried by the first signal based on the complex signal sequence in the first signal.

Alternatively, if the network side configures the first time unit, this first time unit may be specifically as described above. The determining, based on first information, information carried by the first signal may include: the terminal determines, based on the complex signal sequence in the first signal and a time position of the complex signal sequence, the information carried by the first signal; or determines, based on the complex signal sequence and the on-off keying signal in the first signal, the information carried by the first signal.

Optionally, if the network side does not configure an on-off keying signal (such as an OOK signal), the determining, based on first information, information carried by the first signal may include: the terminal determines the information carried by the first signal based on the complex signal sequence in the first signal.

Alternatively, if the network side configures the on-off keying signal, the determining, based on first information, information carried by the first signal may include: the terminal determines the information carried by the first signal based on the complex signal sequence in the first signal and the time position of the complex signal sequence; or determines, based on the complex signal sequence and the on-off keying signal in the first signal, the information carried by the first signal.

This application is described below with reference to specific embodiments.

In embodiments of this application, a network side device (such as, a network node) sends a first signal, for example, an LP-WUS (the following description uses the LP-WUS as an example, but may also be extended to another low-power signal such as an LP-SS), for waking up a main receiver by using a low-power receiver of a terminal. The first signal sent by the network side device may be an on-off keying signal (an OOK signal). In addition, the first signal may further carry a complex signal sequence. For example, the complex signal sequence is modulated onto an ON symbol of an OOK signal. In this case, the complex signal sequence is, for example, a time-domain signal before discrete Fourier transform (Discrete Fourier Transform, DFT). Alternatively, the complex signal sequence is modulated onto an OFDM symbol. In this case, the complex signal sequence is, for example, a frequency-domain signal before inverse fast Fourier transform (Inverse Fast Fourier Transform, IFFT). Preferably, the complex signal sequence in the first signal is a complex sequence determined based on at least one of the following or a sequence determined through a real sequence or a complex sequence generated (for example, through multiplication) based on at least two of the following: an M sequence, a ZC sequence, a gold sequence, and a CAZAC sequence. In addition, the complex signal sequence may include a sequence generated through a constellation point corresponding to one or more of the following modulation modes: BPSK, pi/2 BPSK, QPSK, 16QAM, 64QAM, 256QAM, 1024QAM, 4096QAM, and the like. The M sequence or the gold sequence may be represented in a unipolar manner, for example, a value of each element of 0 or 1, or may be represented in a bipolar manner, for example, a value of each element of ±1. Preferably, the multiplication of the two sequences may be a Kronecker product of the two sequences. For example, a sequence is a ZC sequence with a length of 12, and the other sequence is [1 1 1]. After the Kronecker product, the two sequences are changed into a complex sequence with a length of 36. Preferably, the complex sequence may be a sequence subjected to upsampling. For ease of description, in the following related description, a complex signal sequence is represented through an OFDM sequence. This is not limited thereto.

In an optional embodiment, in a first time unit, a number of bits carried by the first signal through an OOK symbol may be different from a number of bits carried through the OFDM sequence. For example, in the first time unit, the OOK symbol carries 1 information bit, and N1 OFDM sequences carry X information bits, where N1≥1, and X>1.

Assuming that a first time unit includes Nof OFDM symbols or includes No OOK chips, No or Nof may be predefined by a network configuration or a protocol, for example, Nof=1, or No=1; or No or Nof may be k times an encoding length, where k is a positive integer (for example, k=1); or No may be k times a number of OOK chips required to carry 1 information bit, where k is a positive integer (for example, k=1); or Nof may be k times a number of OFDM symbols corresponding to the number of OOK chips required to carry 1 information bit, where k is a positive integer (for example, k=1); or the first time unit can carry all information bits Xinf of the first signal, where the information bits include CRC or do not include the CRC.

For example, if the network side device configures a first time unit including Nof OFDM symbols, then it may be that an OFDM sequence in the Nof OFDM symbols carries all information bits Xinf of the first signal, or the OFDM sequence in the Nof OFDM symbols and the OOK symbols carry all information bits Xinf of the first signal, or the OFDM sequence in the Nof OFDM symbols and a position of a second time unit where the OFDM sequence is located carry all information bits Xinf of the first signal.

For another example, 1 bit of information in the first signal is converted through a line code having a length of L, such as Manchester coding, to obtain L bits. If one OFDM symbol carries only one OOK chip, the first time unit may include L OFDM symbols, namely, L OOK chips. If one OFDM symbol carries M2 (M2>1) OOK chips, the first time unit may include L OOK chips, or L/M2 OFDM symbols. In addition, 1 bit of information may also be subjected to channel coding having a length of L1, such as repetition coding, polar code, RM coding, or another coding manner. This is not limited herein.

For another example, 1 bit of information in the first signal is subjected to channel coding having a length of L1 and line code having a length of L to obtain L1 * L bits. If one OFDM symbol carries only one OOK chip, the first time unit may be L1 * L OFDM symbols, that is, L1 * L OOK chips. If one OFDM symbol carries M2 (M2>1) OOK chips, the first time unit may be L1 * L OOK chips, or L1 * L/M2 OFDM symbols.

For another example, if the information in the first signal is not coded, the first time unit may be one OFDM symbol, or one OOK chip. For another example, regardless of whether coding is performed, the first time unit is one OFDM symbol, or one OOK chip.

In an optional embodiment, in a first time unit, if a set of sequences that may be sent by a network side device includes N1 OFDM sequences (denoted as first-type OFDM sequences), carrying X information bits, the network side device may select one OFDM sequence for sending from the N1 OFDM sequences. For example, the N1 first-type OFDM sequences may be permutations and combinations of time-domain sequences after IFFT at sending ends for each OFDM symbol within a first time unit.

In an optional embodiment, if a low-power receiver used by a terminal does not have a capability to detect an OFDM sequence, but only has a capability to detect an OOK signal, that is, a first-type low-power receiver is used, then the terminal can only demodulate M1/L information bits in one first time unit, where M1 is a number of OOK chips in one first time unit.

In an optional embodiment, if the low-power receiver used by the terminal has a capability to detect an OFDM sequence, that is, a second-type low-power receiver is used, then a number of bits demodulated by the terminal in one first time unit may be determined based on the following Implementation 1 or Implementation 2.

### Implementation 1

For example, for a first time unit, X=M * log2 (N) information bits may be carried, where N is a number of OFDM symbols in an OOK ON symbol, and M is a number of OOK ON symbols in the first time unit. A network side device selects, in one OOK ON symbol, one OFDM sequence from the N OFDM sequences for sending. Based on a specific example, the first time unit is one OOK chip, and this OOK chip may be an OOK ON symbol or an OOK OFF chip. Therefore, M=1 or M=0; In the OOK ON symbol, the network side device selects one OFDM sequence for sending from the N OFDM sequences; in the OOK OFF chip, the network side device does not send an OFDM sequence; and then in one first time unit, log2 (N) information bits or 0 bits of information may be carried.

In an optional embodiment, Xinf information bits carried by an LP-WUS may be carried in a chronological order by one or more first time units in a time resource of the LP-WUS. For example, X bits carried in an initial first time unit are X bits of a most significant bit (Most Significant Bit, MSB) or a least significant bit (Least Significant Bit, LSB) in the Xinf information bits. Using Xinf=8 as an example, if X=4 bits, first 4 bits of information of 8 bits of information are carried in an initial first time unit, and last 4 bits of information of the 8 bits of information are carried in a second first time unit. Alternatively, the last 4 bits of information of the 8 bits of information are carried in the initial first time unit, and the first 4 bits of information of the 8 bits of information are carried in the second first time unit.

In an optional embodiment, the first time unit may include one or more second time units, and the second time unit may be one OOK symbol, for example, an OOK ON symbol, or may be a portion of one OFDM symbol. For example, a time resource of one OFDM symbol may be divided into M2 equal-length sub-portions, and the second time unit is one sub-portion. For ease of description below, the OOK symbol is used as an example for the second time unit. This is not limited thereto. According to an implementation, signal generation at a sending end includes DFT/LS and IFFT operations (which may be equivalent operations implementing the same function). Before the DFT/LS, a sequence of N second-type OFDM sequences may be sent in an OOK ON symbol. For example, if N=4, one OOK ON symbol may carry 2 bits of information. It is assumed that M2 is a number of OOK symbols in an OFDM symbol, and if M2>1, for example, M2=4, Mₒₙ₂= M2/2=2, which is a number of OOK ON symbols in one OFDM symbol. Permutations and combinations of second-type OFDM sequences sent in Mₒₙ₂ OOK ON symbols may be equivalent to N^{Mon2} OFDM sequences. If a first time unit includes Nof OFDM symbols, the first time unit includes M=Mₒₙ₂ * No OOK ON symbols. If the second time unit is an OOK ON symbol, M represents a number of second time units included in one first time unit. If the second time unit is an OOK symbol, and Manchester coding is used for the LP-WUS, 2*M represents the number of the second time units included in one first time unit. Therefore, in one first time unit, N^{(Mon2 * Nof)} OFDM sequences, or N^{M} OFDM sequences are included. The OFDM sequences in one first time unit may carry M*log2 (N) information bits.

In an optional embodiment, the first time unit is the same as the second time unit. Therefore, it is no need to distinguish between the first time unit and the second time unit, for example, both being an OOK symbol, or an OFDM symbol.

In an optional embodiment, it is assumed that original information sent through the LP-WUS is [0 1 0 0 0 0 1 1], Xinf=8 bits, an OFDM symbol carries M2=4 OOK symbols, and a Manchester coding length L=2. Then, if 8 bits of information are carried by the OOK symbol, 4 OFDM symbols are required, with a total of 16 OOK symbols, where each bit requires 2 OOK symbols, as shown in FIG. 5. It is assumed that a length of one first time unit is determined based on a coding length. In other words, in one first time unit, 2 OOK symbols are included, then a number M of OOK ON symbols in one first time unit is equal to 1. If 8 bits of information are carried by an OFDM sequence, a number of second-type OFDM sequences is N=4, and 4 sequences are S1, S2, S3, and S4, then: M*log2 (N)=2 bits may be carried in one first time unit through the OFDM sequences. For example, S1 corresponds to 00, S2 corresponds to 01, S3 corresponds to 10, and S4 corresponds to 11. In this way, first 2 OFDM symbols may carry the 8 bits of information. The 8 bits of information may be repeatedly transmitted in last 2 OFDM symbols, as shown in FIG. 5. Alternatively, the network side device may send another signal in the last 2 OFDM symbols based on a requirement, but an OOK waveform cannot be affected.

Correspondingly, a terminal based on a second type of low-power receivers may detect an OFDM sequence in each first time unit of the LP-WUS. For example, in each OOK symbol in a first time unit, detection of 4 OFDM sequences is attempted: if one OFDM sequence is detected in one OOK symbol, 2 bits of information may be obtained. If no OFDM sequence is detected in one OOK symbol, no bit information exists.

In another optional embodiment, assuming that a length of a first time unit is 1 OOK symbol, and a number M of OOK ON symbols in the first time unit is equal to 1, then: M*log2(N)=2 bits may be carried in the first time unit through an OFDM sequence. Correspondingly, the terminal based on the second type of low-power receivers may detect an OFDM sequence in each first time unit of the LP-WUS and attempt detection of 4 OFDM sequences in each OOK symbol: if one OFDM sequence is detected in one OOK symbol, 2 bits of information may be obtained. If no OFDM sequence is detected in one OOK symbol, no bit information exists.

According to another implementation, signal generation at a sending end may not involve a DFT/LS operation. In one OFDM symbol, one sequence in N OFDM sequences (denoted as third-type OFDM sequences) may be sent to carry log2(N) information bits. The third-type OFDM sequences are frequency-domain sequences before IFFT or time-domain sequences after IFFT of one OFDM symbol. If one first time unit includes Nof OFDM symbols, it may be equivalent that at most N^{Nof} third-type OFDM sequences exist in one first time unit. Alternatively, if one first time unit includes M (M=Mₒₙ₂) OOK ON symbols, that is, equivalent to sending M OFDM symbols of third-type OFDM sequences, then it may be equivalent that at most N^{M} third-type OFDM sequences exist in one first time unit, and M*log2(N) bits may be carried.

In an optional embodiment, it is assumed that original information sent through the LP-WUS is [0 1 0 0 0 0 1 1], Xinf=8 bits, an OFDM symbol carries/includes M2=1 OOK symbol, and a Manchester coding length L=2. Then, if 8 bits of information are carried by the OOK symbol, 16 OFDM symbols are required, with a total of 16 OOK symbols, where each bit requires 2 OOK symbols (namely, 2 OFDM symbols), as shown in FIG. 6. It is assumed that a length of one first time unit is one OFDM symbol. If 8 bits of information are carried by an OFDM sequence, a number of third-type OFDM sequences is N=4, and 4 sequences are S1, S2, S3, and S4, a number of bits carried by one first time unit is M*log2(N)=2 bits. In this way, first 4 OFDM symbols may carry the 8 bits of information. Through the LP-WUS, the 8 bits of information may repeatedly transmitted, or the network side device may send another signal based on a requirement, but an OOK waveform cannot be affected.

Correspondingly, a terminal based on a second type of low-power receivers may detect an OFDM sequence in each first time unit of the LP-WUS. For example, in each OFDM, detection of 4 OFDM sequences is attempted: if an OFDM sequence is detected, 2 bits of information are obtained. If no OFDM sequence is detected, 0 bit of information is indicated. In other word, no bit information exists.

For the OOK ON symbol or the OOK OFF symbol described above, the terminal based on the second type of low-power receivers may determine the OOK ON symbol or the OOK OFF symbol by envelope detection, or by whether an OFDM sequence is detected. For example, if the sequence is detected, it is the OOK ON symbol, and if the sequence is not detected, it is the OOK OFF symbol. Alternatively, the terminal based on the second-type low-power receiver may not identify the OOK ON symbol or the OOK OFF symbol, and only needs to determine whether a number of carried bits is 0 based on whether the sequence is detected.

For ease of understanding, the concept of the first time unit is used in the foregoing description. However, in a specific implementation, the network side device may not configure the first time unit, or the protocol does not define the first time unit. For example, the network side device only needs to configure an OFDM sequence in one second time unit, or predefines an OFDM sequence in one second time unit through a protocol, without involving the first time unit.

### Implementation 2

Different from Implementation 1, in Implementation 2, a number of information bits carried in one first time unit is X1=X + Y, where X is a number of information bits determined based on an OFDM sequence, Y is a number of information bits determined based on a time position where a second-type OFDM sequence is detected or a position of an OOK ON symbol, or Y is a number of information bits carried by an OOK symbol. The X bits of information may be determined based on the foregoing Implementation 1, and details are not described herein again.

Compared with Implementation 1, Implementation 2 may allow more information bits carried in the same time resource, and a terminal based on a second-type low-power receiver may obtain all bit information of an LP-WUS in a shorter time, thereby saving power. However, with Implementation 2, the terminal based on the second-type low-power receiver calculates bits in each first time unit in a more complex manner than Implementation 1, because it is further needed to determine bits based on a time position where a second-type OFDM sequence is detected and a position of an OOK ON symbol, or the terminal is required to detect information carried by the OOK symbol.

In an implementation, Y bits may be determined based on a time position where a second-type OFDM sequence is detected or a position of an OOK ON symbol. For example, if a coding length is L, and a number of OOK symbols in one first time unit is M1, then in the first time unit, a number of permutations and combinations of time positions where the second-type OFDM sequence is detected or positions where the OOK ON symbol is detected is 2^{(M1/L)}, which may allow carrying of Y=log2 (2^{(M1/L)})=M1/L bits. For example, Manchester coding with a length of L=2 is used as an example. For every two OOK symbols or every two second time units (one second time unit is one OOK symbol), the time position where the second-type OFDM symbol is detected, or the OOK ON symbols at a first position and a second position represent two values of 1 bit, for example, 0 or 1. Assuming that a number of OOK symbols in a first time unit is M1=4, then Y=2 bits.

In another implementation, the Y bits are information bits carried by an OOK symbol. Similarly, Y=M1/L.

In an optional embodiment, for Xinf information bits carried by the LP-WUS, positions of the X bits and the Y bits in the Xinf bits further need to be determined. An example in which all information bits Xinf of the LP-WUS are carried in the first time unit is used, that is, Xinf=X1=X + Y, how to determine the positions of the X bits and the Y bits in each first time unit in the Xinf bits is described below. Assuming that a time resource of the LP-WUS includes Z first time units, in a z^{th} time unit, the Y bits may be (z-1) * Y+1-th to z * Y-th bits of an MSB or (z-1) * Y+1-th to z * Y-th bits of an LSB in Xinf, and the X bits are the remaining bits in Xinf. The X bits may be carried by an OFDM sequence in each second time unit in the first time unit, and the X bits are included in a chronological order of the second time units.

In an optional embodiment, the network side device may configure the first time unit, for example, configure a number of OFDM symbols or a number of OOK symbols occupied by the first time unit. Alternatively, the network side device may configure a value of Y in the first time unit, for example, a number Y of bits carried by an OOK symbol in one first time unit, and then a length of the first time unit may be determined based on Y and a coding length, for example, a number of occupied OOK symbols or a number of occupied OFDM symbols. Alternatively, the network side device may configure a number X of bits carried by the OFDM sequence of the first time unit, and then the length of the first time unit may be determined based on X and a number of the OFDM sequences of the OOK symbol. Alternatively, the length of the first time unit may be determined based on a predefined rule. For example, a number Y of bits carried by an OOK symbol of the first time unit is Xinf/2, or the first time unit is one OFDM symbol, or the first time unit is a half of time resources of the LP-WUS.

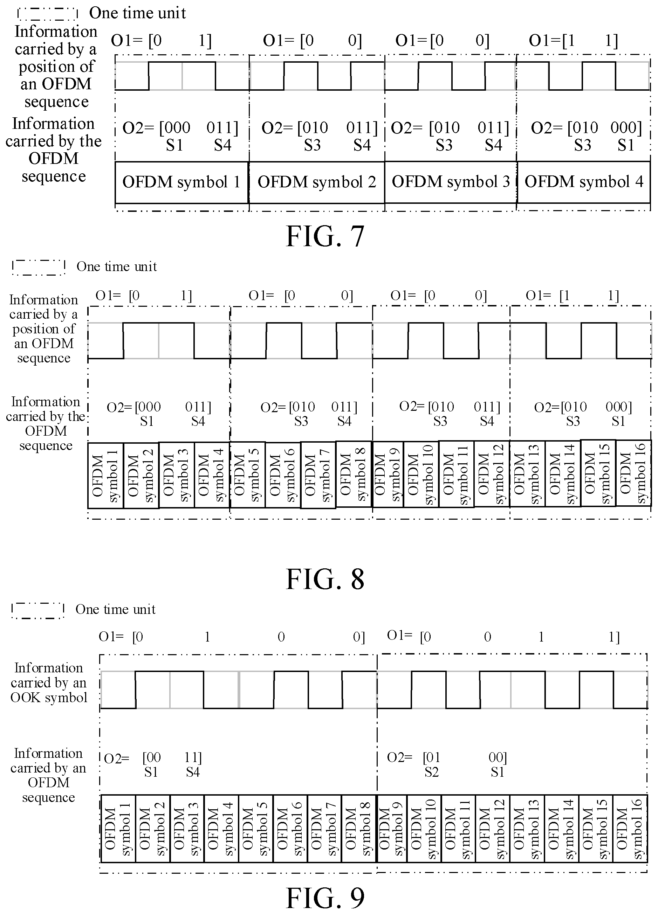

In an optional embodiment, it is assumed that original information sent through the LP-WUS is [0 1 0 0 0 0 1 1], Xinf=8 bits, an OFDM symbol carries M2=4 OOK symbols, and a Manchester coding length L=2. Then, if 8 bits of information are carried by the OOK symbol, 4 OFDM symbols are required, with a total of 16 OOK symbols, where each bit requires 2 OOK symbols. It is assumed that a number of second-type OFDM sequences is N which is equal to 8, and the 8 sequences are S1, S2, S3, S4, S5, S6, S7, and S8. The network side device configures the length of a first time unit to be 1 OFDM symbol. A number M of OOK ON symbols in one first time unit is equal to 2. Carried bits with OFDM sequence detection are represented as **O2**, with a length of X=M * log2 (N)=6 bits. Bits carried by a position of an OFDM sequence are represented as **O1**, with a length of Y=M1/L=2 bits. Then, as shown in FIG. 7, in an OFDM symbol 1, an order of the 8 bits of information may be [**O1, O2**]. In an OFDM symbol 2, the order of the 8 bits of information is [O2 (1), O2 (2), **O1**, O2 (3), ..., O2 (6)]. In an OFDM symbol 3, the order of the 8 bits of information is [O2 (1), O2 (2), O2 (3), O2 (4), **O1**, O2 (5), O2 (6)]. In an OFDM symbol 4, the order of the 8 bits of information is [**O2, O1**].

The terminal based on the second-type low-power receiver may detect, in each first time unit of the LP-WUS, time positions where an OFDM sequence and an OFDM sequence are located, and determine bit positions of X bits and Y bits based on positions of first time units in a time resource of the LP-WUS. For example, in a z^{th} time unit, the Y bits are (z-1) * Y+1-th to z * Y-th bits of an MSB in Xinf or (z-1) * Y+1-th to z * Y-th bits of an LSB in Xinf, and the X bits are the remaining bits in Xinf.

In an optional embodiment, as shown in FIG. 7, through the LP-WUS, the 8 bits of information may be repeatedly transmitted for 4 times. In another implementation, a number of times of repeated transmission through the LP-WUS may be less than 4. For example, the 8 bits of information are transmitted only in a first OFDM symbol, while in the remaining 3 OFDM symbols, no OFDM sequence is transmitted or another signal is sent as required, but an OOK waveform cannot be affected.

In an optional embodiment, as shown in FIG. 8, it is assumed that original information sent through the LP-WUS is [0 1 0 0 0 0 1 1], Xinf=8 bits, an OFDM symbol carries M2=1 OOK symbol, and a Manchester coding length L=2. Then, if 8 bits of information are carried by the OOK symbol, 16 OFDM symbols are required, with a total of 16 OOK symbols, where each bit requires 2 OOK symbols, namely, 2 OFDM symbols. It is assumed that a number of second-type or third-type OFDM sequences is N=8, and the 8 sequences are S1, S2, S3, S4, S5, S6, S7, and S8. The network side device configures a length of a first time unit to be 4 OFDM symbols, and a number M of OOK ON symbols in one first time unit is 2. Carried bits with OFDM sequence detection are represented as O2, with a length of X=M * log2(N)=6 bits. The bits carried by a position of the OFDM sequence are represented as O1, with a length of Y=M1/L=2 bits. Then, in OFDM symbols 1 to 4, an order of the 8 bits of information may be [**O1, O2**]. In OFDM symbols 5 to 8, the order of the 8 bits of information is [O2(1), O2(2), **O1**, O2(3), ..., O2(6)]. In OFDM symbols 9 to 12, the order of the 8 bits of information is [O2(1), O2(2), O2(3), O2(4), **O1**, O2(5), O2(6)]. In OFDM symbols 13 to 16, the order of the 8 bits of information is [**O2, O1**]. The terminal based on the second-type low-power receiver may detect, in each first time unit of the LP-WUS, time positions where an OFDM sequence and an OFDM sequence are located, and determine bit positions of X bits and Y bits based on positions of first time units in a time resource of the LP-WUS. For example, in a z^{th} time unit, the Y bits are (z-1) * Y+1-th to z * Y-th bits of an MSB in Xinf or (z-1) * Y+1-th to z * Y-th bits of an LSB in Xinf, and the X bits are the remaining bits in Xinf.

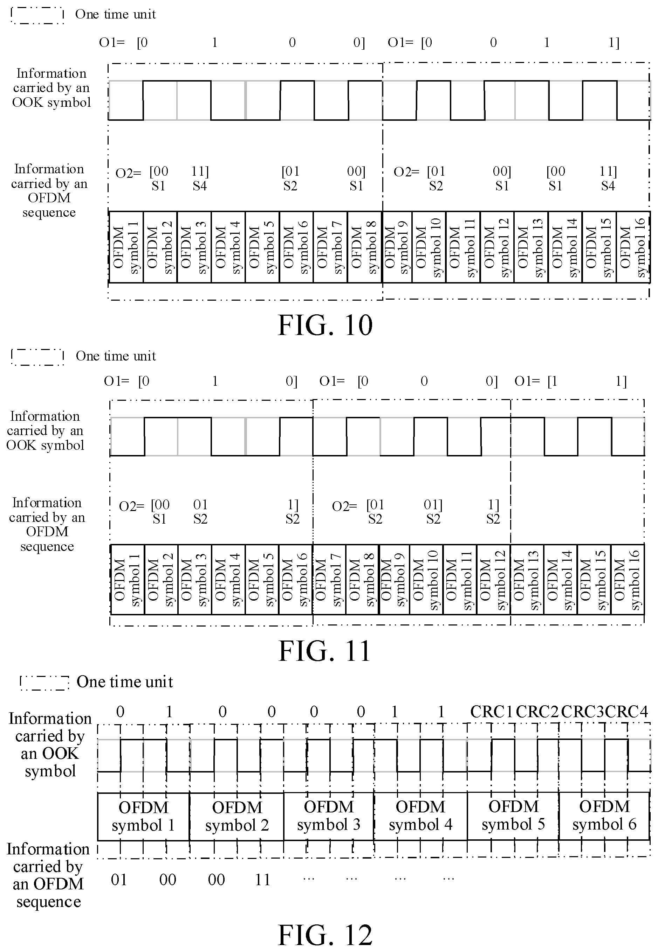

In another optional embodiment, as shown in FIG. 9, it is assumed that original information sent through the LP-WUS is [0 1 0 0 0 0 1 1], Xinf=8 bits, an OFDM symbol carries M2=1 OOK symbol, and a Manchester coding length L=2. Then, if 8 bits of information are carried by the OOK symbol, 16 OFDM symbols are required, with a total of 16 OOK symbols, where each bit requires 2 OOK symbols, namely, 2 OFDM symbols. It is assumed that a number of second-type or third-type OFDM sequences is N=4, the 4 sequences are S1, S2, S3, and S4, and the network side device may configure a value of Y (for example, Y=4 is a number of information bits carried by an OOK symbol), or the network side device configures a length of the first time unit. It is assumed that the length of the first time unit is 8 OFDM symbols, M=4 is a number of OOK ON symbols in one first time unit, an OFDM sequence in one first time unit carries Xinf=8 bits, and X=Xinf-Y=4 bits. In one first time unit, the OFDM sequence may carry X1=M*log2(N)=8 bits of information, where X < X1, and then, first 2 OOK ON symbols in the first time unit may carry X=4 bits of information. Optionally, in last 2 OOK ON symbols of one first time unit, information in O1 may be sent, as shown in FIG. 10. Alternatively, sending of OFDM sequences in the last 2 OOK ON symbols is not limited. The OFDM sequences may not be transmitted or another signal may be sent based on a requirement, but an OOK waveform cannot be affected.

In an optional embodiment, as shown in FIG. 11, it is assumed that original information sent through the LP-WUS is [0 1 0 0 0 0 1 1], Xinf=8 bits, an OFDM symbol carries M2=1 OOK symbol, and a Manchester coding length L=2. Then, if 8 bits of information are carried by the OOK symbol, 16 OFDM symbols are required, with a total of 16 OOK symbols, where each bit requires 2 OOK symbols, namely, 2 OFDM symbols. It is assumed that a number of second-type or third-type OFDM sequences is N=4, the 4 sequences are S1, S2, S3, and S4, and the network side device may configure a value of Y (for example, Y=3 is a number of information bits carried by an OOK symbol), or the network side device configures a length of the first time unit. It is assumed that the length of the first time unit is 6 OFDM symbols, and M=3 is a number of OOK ON symbols in one first time unit. In one first time unit, Xinf=8 bits are carried through an OFDM sequence, and X=Xinf-Y=5 bits. In one first time unit, the OFDM sequence may carry X1=M*log2(N)=6 bits of information, where X<X1, and then 1 bit of information may be carried in the last OOK ON symbol in the first time unit. It can be seen that the time resource of the LP-WUS does not include an integer multiple of the length of the first time unit. Therefore, a length of a last first time unit is shortened into 4 OFDM symbols. In this first time unit, sending of OFDM sequences in ON symbols is not limited. The OFDM sequences may not be transmitted or another signal may be sent based on a requirement, but an OOK waveform cannot be affected.

The terminal based on the second-type low-power receiver may detect, in each first time unit of the LP-WUS, information carried by the OFDM sequence and the OOK symbol. The terminal may detect only one or more complete first time units.

It should be noted that, to enable a terminal to determine which manner is used to determine bits carried in a first time unit (for example, Implementation 1 or Implementation 2, or another implementation), a manner to be used may be determined through a protocol agreement in an implementation. Optionally, Implementation 2 is used for a first signal used in a radio resource control (Radio Resource Control, RRC) idle (idle)/inactive (inactive) state, and Implementation 1 is used for a first signal used in an RRC connected state. Optionally, Implementation 2 is used for a first signal used to wake up an MR to receive paging information, and Implementation 1 is used for a first signal used to wake up the MR to receive a physical downlink control channel (Physical Downlink Control Channel, PDCCH). In another implementation, the network side device may configure a manner to be used, or a manner to be used is determined based on a predefined rule. For example, if the network side device configures the first signal to use Manchester coding, Implementation 2 is used; otherwise, Implementation 1 is used. For another example, if the network side device configures the first time unit, Implementation 2 is used; otherwise, Implementation 1 is used.

According to any one of the foregoing implementations, whether bit information carried by an OFDM sequence includes CRC may be configured by a network side device, or predefined through a protocol. For example, although the LP-WUS carries, through an OOK symbol, load information and CRC bits generated based on the load information, it may be configured based on a network side device configuration or predefined by a protocol that the bit information carried by the OFDM sequence includes only the load information without the CRC bits.

For example, in the examples in FIG. 6 and in FIG. 8 to FIG. 11, it is assumed that information bits Xinf carried via an LP-WUS through an OOK symbol and/or an OFDM sequence are the same, and all include load information, or all include load information and CRC bits generated based on the load information.

For another example, information bits carried in the two implementations are different. Information bits carried through an OOK symbol include load information and CRC bits generated based on the load information. To be specific, the OOK symbol carries Xinf and CRC bits, where Xinf indicates bits of the load information, but information bits carried through an OFDM sequence include only load Xinf.

Optionally, if the bit information carried through the OFDM sequence includes only the load information and does not include the CRC bits, the terminal based on the second-type low-power receiver may detect only the first time unit that includes the load information and does not detect the first time unit that includes the CRC.

Based on an example of Implementation 1, as shown in FIG. 12, it is assumed that a load of original information sent through an LP-WUS is [0 1 0 0 0 0 1 1], Xinf=8 bits, and Xcrc=4 bits of CRC. One OFDM symbol carries M2=4 OOK symbols, and a Manchester coding length L=2. Therefore, if Xinf + Xcrc bits of information are carried through an OOK symbol, 6 OFDM symbols are required, and a total of 12 OOK symbols are required, where 2 OOK symbols are required for each bit. It is assumed that one first time unit is one OOK symbol, a number of OOK ON symbols in the first time unit is M=1 or M=0. If 8 bits of information are carried through an OFDM sequence, a number of second-type OFDM sequences is N=4, and the 4 sequences are S1, S2, S3, and S4, then: M*log2 (N)=2 bits may be carried in one first time unit through the OFDM sequences. For example, S1 corresponds to 00, S2 corresponds to 01, S3 corresponds to 10, and S4 corresponds to 11. In this way, first 2 OFDM symbols may carry the 8 bits of information. These 8 bits of information may be repeatedly transmitted in last 4 OFDM symbols, or the network side device may send another signal based on a requirement, but an OOK waveform cannot be affected.

Correspondingly, the terminal based on the second-type low-power receiver may detect, in each first time unit of the LP-WUS, the OFDM sequence to obtain Xinf=8 bits of load information. The terminal based on the first-type low-power receiver may obtain Xinf + Xcrc=12 bits of information in 6 OFDM symbols of the LP-WUS.

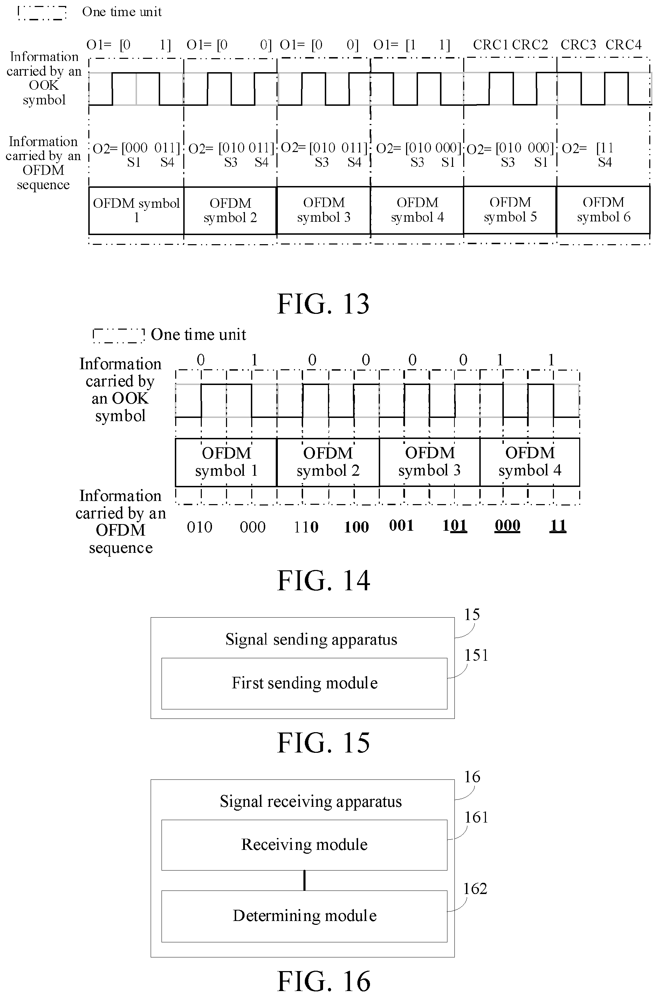

Based on an example of Implementation 2, as shown in FIG. 13, it is assumed that a load of original information sent through an LP-WUS is [0 1 0 0 0 0 1 1], Xinf=8 bits, and Xcrc=4 bits of CRC. One OFDM symbol carries M2=4 OOK symbols, and a Manchester coding length L=2. Therefore, if Xinf + Xcrc bits of information are carried through an OOK symbol, 6 OFDM symbols are required, and a total of 12 OOK symbols are required, where 2 OOK symbols are required for each bit. It is assumed that a number of second-type OFDM sequences is N=8, and the 8 sequences are S1, S2, S3, S4, S5, S6, S7, and S8, the network side device configures a length of the first time unit to be 1 OFDM symbol, M=2 is a number of OOK ON symbols in one first time unit, carried bits with OFDM sequence detection are represented as **O2**, a length is X=M * log2 (N)=6 bits, and load information bits carried by an OOK symbol are represented as **O1** (excluding the CRC), with a length of Y=M1/L=2 bits, then in an OFDM symbol 1, an order of the 8 bits of information is [**O1, O2**]. In an OFDM symbol 2, the order of the 8 bits of information is [O2 (1), O2 (2), **O1**, O2 (3), ..., O2 (6)]. In an OFDM symbol 3, the order of the 8 bits of information is [O2 (1), O2 (2), O2 (3), O2 (4), **O1**, O2 (5), O2 (6)]. In an OFDM symbol 4, the order of the 8 bits of information is [**O2, O1**]. In an OFDM symbol 5 and an OFDM symbol 6, the 8 bits of load information are carried through OFDM sequences, as shown in FIG. 13. In the two OFDM symbols, because **O1** does not exist, the 8 bits of information are all carried by the OFDM sequences. Alternatively, in the OFDM symbol 5 and the OFDM symbol 6, the network side device may send another signal based on a requirement, but an OOK waveform cannot be affected. Correspondingly, the terminal based on the second-type low-power receiver may detect an OFDM sequence in each first time unit of the LP-WUS that includes load information to obtain Xinf=8 bits of load information. The terminal may not detect the first time unit where CRC information is located.

According to any one of the foregoing implementations, if information bits are repeatedly sent through an OFDM sequence, in an implementation, only part or all information of one transmission may be carried in a first time unit, for example, as shown in FIG. 5, FIG. 9, and FIG. 11. In another implementation, information from a plurality of repeated transmissions may be carried in a first time unit. As shown in FIG. 14, based on Implementation 1, N=8 sequences are in an OOK ON symbol, and 3 bits of information may be carried. It can be seen that last 2 bits of a first transmission and a 1^{st} bit of a second transmission are carried in a first OOK ON symbol in an OFDM symbol 2. In a last OOK ON symbol in an OFDM symbol 3, a last bit in the second transmission and a 1^{st} bit and a 2^{nd} bit in a third transmission are carried. In this way, an advantage is that more repeated transmission times may be implemented through the same resource.

According to any one of the foregoing implementations, if the LP-WUS corresponds to a plurality of transmissions, the plurality of repeated transmissions may be repetitions at a load information level. If CRC information needs to be sent, the load information and the CRC information are sent. For example, if the load information is 8 bits such as [0 1 0 0 0 0 1 1], each transmission includes 8 bits of information. Alternatively, the plurality of repeated transmissions are repetitions at a bit level. For example, if the load information is 8 bits such as [0 1 0 0 0 0 1 1], a 1^{st} bit is first repeatedly sent for X times, and then a 2^{nd} bit is repeatedly sent for X times, until an 8^{th} bit is repeatedly sent for X times.

The signal sending method provided in embodiments of this application may be performed by a signal sending apparatus. In embodiments of this application, a signal sending apparatus provided in embodiments of this application is described by using an example in which the signal sending apparatus performs the signal sending method.

Refer to FIG. 15. FIG. 15 is a schematic structural diagram of a signal sending apparatus according to an embodiment of this application. The apparatus is applied to a network side device. As shown in FIG. 15, a signal sending apparatus 150 includes:
a first sending module 151, configured to send a first signal. The first signal includes at least a complex signal sequence, the complex signal sequence carries information, or the complex signal sequence and a time position of the complex signal sequence carry information, or the complex signal sequence and an on-off keying signal carry information.

Optionally, if the first signal further includes an on-off keying signal, the complex signal sequence is a sequence modulated on an ON symbol of the on-off keying signal (OOK ON symbol).

Optionally, a time resource of the first signal includes one or more first time units, the first time unit includes one or more orthogonal frequency division multiplex OFDM symbols, or the first time unit includes one or more on-off keying signal symbols (OOK symbols).

Optionally, the time resource of the first signal includes one or more first time units, and the first time unit carries some or all information of the first signal.

Optionally, the time resource of the first signal includes a plurality of first time units. A relationship between a bit position of information carried by a complex signal sequence in the first time unit and a bit position of information carried by a time position of the complex signal sequence or the information carried by the on-off keying signal is determined based on a position of the first time unit in the plurality of first time units.

Optionally, a number of complex signal sequences that the first signal is capable of carrying is N, and one of the N complex signal sequences is sent in a second time unit, and N is an integer greater than or equal to 1; and the second time unit is any one of the following: an OFDM symbol, a partial OFDM symbol, an OOK symbol, or an ON symbol of the on-off keying signal (OOK ON symbol).

Optionally, a maximum number of bits carried by the complex signal sequence in the second time unit is log2(N).

Optionally, the first time unit includes one or more second time units, and a number of bits carried in the first time unit satisfies any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

Optionally, if the first time unit carries all bit information of the first signal, all bit information of the first signal is load information carried by the first signal, or all bit information of the first signal includes the load information carried by the first signal and a cyclical redundancy check CRC generated based on the load information.

Optionally, the information carried by the complex signal sequence is the load information carried by the first signal; or the information carried by the complex signal sequence includes the load information carried by the first signal and CRC generated based on the load information; or
the information carried by the complex signal sequence and a time position of the complex signal sequence is the load information carried by the first signal; or the information carried by the complex signal sequence and the time position of the complex signal sequence includes the load information carried by the first signal and CRC generated based on the load information.

Optionally, the signal sending apparatus 150 further includes:
a second sending module, configured to send configuration information. The configuration information is used to configure at least one of the following: the complex signal sequence carrying the information, the complex signal sequence and the time position where the complex signal sequence is located carrying the information, and the complex signal sequence and the on-off keying signal carrying the information.

Optionally, the first signal corresponds to a single transmission or a plurality of transmissions.

Optionally, when the first signal corresponds to the plurality of transmissions, only part or all information of the single transmission is carried in the first time unit or the second time unit, or part or all information of the plurality of transmissions is carried in the first time unit or the second time unit.

Optionally, the complex signal sequence includes a complex sequence determined based on at least one of the following:
an M sequence, a ZC sequence, a gold sequence, and a CAZAC sequence;
or the complex signal sequence includes a sequence determined based on a real sequence or a complex sequence generated based on at least two of the following:
   an M sequence, a ZC sequence, a gold sequence, and a CAZAC sequence.

Optionally, the complex signal sequence is generated based on a constellation point corresponding to at least one of the following modulation modes: BPSK, pi/2 BPSK, QPSK, 16 QAM, 64QAM, 256QAM, 1024QAM, and 4096QAM.

Optionally, the first signal is a low-power signal and is received by a low-power receiver.

Optionally, a type of the low-power receiver includes at least one of the following:
a receiver capable of demodulating an on-off keying signal but incapable of detecting a complex signal sequence; or
a receiver capable of detecting a complex signal sequence.

The signal sending apparatus 150 provided in embodiments of this application can implement all of the processes implemented in the method embodiment of FIG. 3, and achieve the same technical effects. To avoid repetition, details are not described herein.

Refer to FIG. 16. FIG. 16 is a schematic structural diagram of a signal receiving apparatus according to an embodiment of this application. The apparatus is applied to a terminal. As shown in FIG. 16, a signal receiving apparatus 160 includes:
a receiving module 161, configured to receive a first signal; and
a determining module 162, configured to determine, based on first information, information carried by the first signal. The first information includes any one of the following: a complex signal sequence in the first signal, the complex signal sequence in the first signal and a time position of the complex signal sequence, and a complex signal sequence and an on-off keying signal in the first signal.

Optionally, the receiving module 161 is specifically configured to use a low-power receiver to receive the first signal.

Optionally, the low-power receiver has a capability of detecting a complex signal sequence.

Optionally, if the first signal includes an on-off keying signal, the complex signal sequence is a sequence modulated on an on symbol of the on-off keying signal.

Optionally, the time resource of the first signal includes one or more first time units, and the first time unit includes one or more OFDM symbols, or the first time unit includes one or more OOK symbols.

Optionally, the time resource of the first signal includes one or more first time units, and the first time unit carries some or all information of the first signal.

Optionally, the time resource of the first signal includes a plurality of first time units, and the receiving module 161 is specifically configured to receive the first signal in the plurality of first time units.

The determining module 162 is specifically configured to: determine, based on a position of the first time unit in the plurality of first time units, a first relationship between a bit position where information carried by the complex signal sequence in the first time unit is located and a bit position where information carried by a time position of the complex signal sequence is located, or determining a second relationship between the bit position where the information carried by the complex signal sequence in the first time unit is located and a bit position where information carried by an on-off keying signal is located; and determine, based on the complex signal sequence in the first time unit and the time position of the complex signal sequence, and the first relationship, the information carried in the first time unit; or determine, based on the complex signal sequence in the first time unit and the on-off keying signal, and the second relationship, the information carried in the first time unit.

Optionally, a number of complex signal sequences that the first signal is capable of carrying is N, and one of the N complex signal sequences is sent in a second time unit, and N is an integer greater than or equal to 1; and the second time unit is any one of the following: an OFDM symbol, a partial OFDM symbol, an OOK symbol, and an OOK ON symbol.

Optionally, a maximum number of bits carried by the complex signal sequence in the second time unit is log2(N).

Optionally, the first time unit includes one or more second time units, and a number of bits carried in the first time unit satisfies any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

Optionally, the first time unit carries all bit information of the first signal, all bit information of the first signal is load information carried by the first signal, or all bit information of the first signal includes the load information carried by the first signal and CRC generated based on the load information.

Optionally, the information carried by the complex signal sequence is the load information carried by the first signal; or the information carried by the complex signal sequence includes the load information carried by the first signal and CRC generated based on the load information;
or the information carried by the complex signal sequence and a time position of the complex signal sequence is the load information carried by the first signal; or the information carried by the complex signal sequence and the time position of the complex signal sequence includes the load information carried by the first signal and CRC generated based on the load information.

Optionally, the determining module 162 is further configured to determine, based on at least one of a network configuration, a protocol agreement, or a predefined rule, the information carried by the first signal based on the first information.

Optionally, the first signal corresponds to a single transmission or a plurality of transmissions.

Optionally, when the first signal corresponds to the plurality of transmissions, only part or all information of the single transmission is carried in the first time unit or the second time unit, or part or all information of the plurality of transmissions is carried in the first time unit or the second time unit.

Optionally, the receiving module 161 is specifically configured to detect a complex signal sequence in the first signal in a second time unit.

The determining module 162 is further configured for any one of the following:
determining, based on a detected complex signal sequence, an information bit carried in the second time unit;
determining, based on the detected complex signal sequence and the time position of the complex signal sequence, the information bit carried in the second time unit; and
determining, based on the detected complex signal sequence and the on-off keying signal, the information bit carried in the second time unit.

Optionally, if no complex signal sequence is detected in the second time unit, no information is carried in the second time unit.

Optionally, if no complex signal sequence is detected in the second time unit, the second time unit corresponds to an off symbol of the on-off keying signal.

Optionally, if a network side does not configure Manchester coding for the first signal, the determining module 162 is configured to determine, based on a complex signal sequence in the first signal, information carried by the first signal.

Alternatively, if the network side configures the first signal to use the Manchester coding, the determining module 162 is configured to: determine, based on the complex signal sequence in the first signal and the time position of the complex signal sequence, the information carried by the first signal; or determine, based on the complex signal sequence and the on-off keying signal in the first signal, the information carried by the first signal.

Optionally, if the network side does not configure the first time unit, the determining module 162 is configured to determine, based on the complex signal sequence in the first signal, the information carried by the first signal.

Alternatively, if the network side configures the first time unit, the determining module 162 is configured to: determine, based on the complex signal sequence in the first signal and the time position of the complex signal sequence, the information carried by the first signal; or determine, based on the complex signal sequence and the on-off keying signal in the first signal, the information carried by the first signal.

Optionally, if the network side does not configure an on-off keying signal, the determining module 162 is configured to determine, based on the complex signal sequence in the first signal, the information carried by the first signal.

Alternatively, if the network side configures an on-off keying signal, the determining module 162 is configured to: determine, based on the complex signal sequence in the first signal and the time position of the complex signal sequence, the information carried in the first signal; or determine, based on the complex signal sequence and the on-off keying signal in the first signal, the information carried by the first signal.

The signal receiving apparatus 160 provided in embodiments of this application can implement all processes implemented in the method embodiments of FIG. 4 and can achieve the same technical effect. To avoid repetition, details are not described herein.

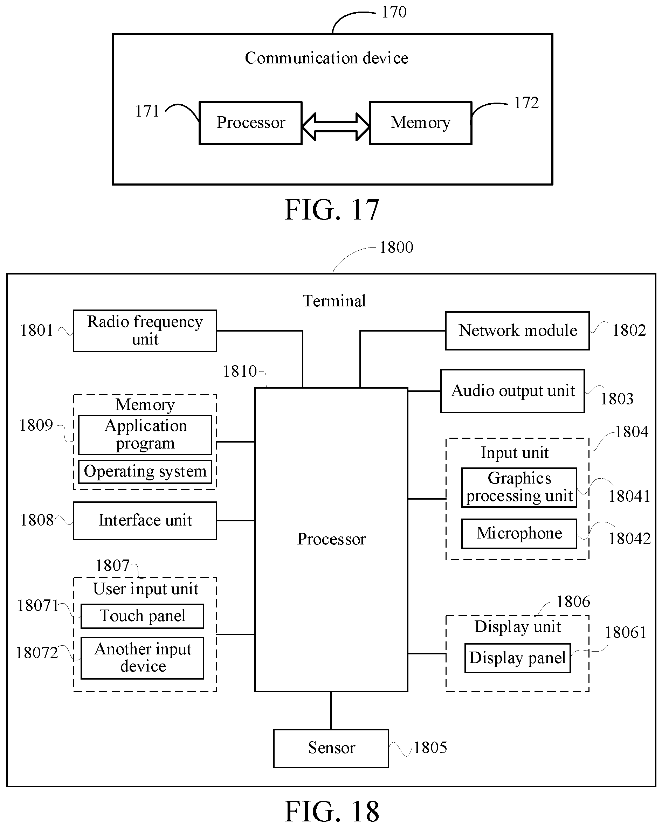

As shown in FIG. 17, an embodiment of this application further provides a communication device 170, including a processor 171 and a memory 172. The memory 172 stores a program or instructions executable in the processor 171. For example, when the communication device 170 is a terminal, the program or the instructions, when executed by the processor 171, implement the steps of the foregoing embodiment of the signal receiving method and can achieve the same technical effects. When the communication device 170 is a network side device, the program or instructions, when executed by the processor 171, implement the steps of the above embodiment of the signal sending method and can achieve the same technical effects. To avoid repetition, details are not described herein.

An embodiment of this application further provides a terminal, including a processor and a communication interface. The communication interface is coupled to the processor, and the processor is configured to run a program or instructions, to implement the steps in the method embodiment shown in FIG. 4. The terminal embodiment corresponds to the foregoing method embodiment of the terminal side. The implementation processes and implementations of the foregoing method embodiments are all applicable to the terminal embodiment and can achieve the same technical effects.

Specifically, FIG. 18 is a schematic diagram of a hardware structure of a terminal for implementing an embodiment of this application.

A terminal 1800 includes, but is not limited to, at least some components of a radio frequency unit 1801, a network module 1802, an audio output unit 1803, an input unit 1804, a sensor 1805, a display unit 1806, a user input unit 1807, an interface unit 1808, a memory 1809, a processor 1810, and the like.

A person skilled in the art may understand that the terminal 1800 may further include a power supply (such as a battery) that supplies power to various components. The power supply may be logically connected to the processor 1810 through a power management system, thereby implementing functions such as management of charging or discharging, and power consumption through the power management system. The terminal structure shown in FIG. 18 constitutes no limitation on the terminal, and the terminal may include more or fewer components than those shown in the figure, or some merged components, or different component arrangements. Details are not described herein.

It should be understood that, in embodiments of this application, the input unit 1804 may include a graphics processing unit (Graphics Processing Unit, GPU) 18041 and a microphone 18042. The graphics processing unit 18041 processes picture data of a static image or a video obtained by a picture capture apparatus (such as a camera) in a video capture mode or a picture capture mode. The display unit 1806 may include a display panel 18061. The display panel 18061 may be configured in a form such as a liquid crystal display or an organic light-emitting diode. The user input unit 1807 includes at least one of a touch panel 18071 and another input device 18072. The touch panel 18071 is also referred to as a touch screen. The touch panel 18071 may include two parts: a touch detection apparatus and a touch controller. The another input device 18072 may include, but is not limited to, a physical keyboard, a function button (such as a volume control button or a power button), a track ball, a mouse, and a joystick. Details are not described herein.

In this embodiment of this application, the radio frequency unit 1801 receives downlink data from a network side device and then may transmit the data to the processor 1810 for processing. In addition, the radio frequency unit 1801 may send uplink data to the network side device. Generally, the radio frequency unit 1801 includes, but is not limited to, an antenna, an amplifier, a transceiver, a coupler, a low noise amplifier, a duplexer, and the like.

The memory 1809 may be configured to store a software program or instructions and various data. The memory 1809 may mainly include a first storage area for storing a program or instructions and a second storage area for storing data. The first storage area may store an operating system, an application or instructions required for at least one function (such as a sound playback function and an image playback function), and the like. In addition, the memory 1809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 1809 in embodiments of this application includes, but is not limited to, these and any other suitable types of memories.

The processor 1810 may include one or more processing units. Optionally, an application processor and a modem processor are integrated in the processor 1810. The application processor mainly processes operations related to an operating system, a user interface, an application program, and the like. The modem processor mainly processes wireless communication signals, and is, for example, a baseband processor. It may be understood that the modem processor may alternatively not be integrated into the processor 1810.

The radio frequency unit 1801 is configured to receive a first signal.

The processor 1810 is configured to determine, based on first information, information carried by the first signal. The first information includes any one of the following: a complex signal sequence in the first signal, the complex signal sequence in the first signal and a time position of the complex signal sequence, and a complex signal sequence and an on-off keying signal in the first signal.

It may be understood that for the implementation processes of all implementations mentioned in embodiments, reference may be made to the relevant description of the foregoing embodiment of the signal receiving method, and the same or corresponding technical effects can be achieved. To avoid repetition, details are not described herein.

An embodiment of this application further provides a network side device, including a processor and a communication interface. The communication interface is coupled to the processor. The processor is configured to run a program or instructions, to implement the steps of the method embodiment shown in FIG. 3. An embodiment of the network side device corresponds to the foregoing method embodiment of the network side device. Each implementation process and implementation of the foregoing method embodiment may be applied to the embodiment of the network side device and can achieve the same technical effect.

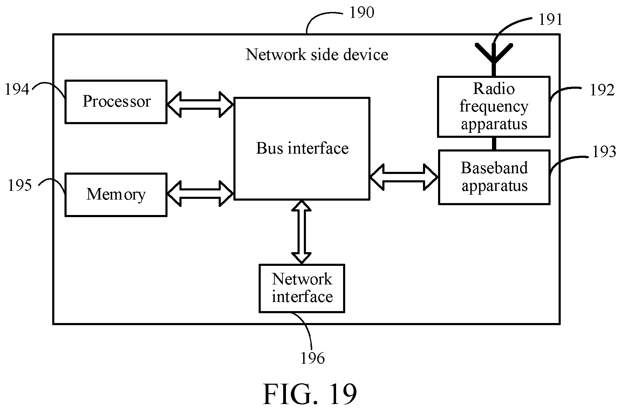

Specifically, an embodiment of this application further provides a network side device. As shown in FIG. 19, the network side device 190 includes an antenna 191, a radio frequency apparatus 192, a baseband apparatus 193, a processor 194, and a memory 195. The antenna 191 is connected to the radio frequency apparatus 192. In an uplink direction, the radio frequency apparatus 192 receives information through the antenna 191 and sends the received information to the baseband apparatus 193 for processing. In a downlink direction, the baseband apparatus 193 processes to-be-sent information and sends the processed to-be-sent information to the radio frequency apparatus 192. The radio frequency apparatus 192 processes the received information and then sends the processed received information through the antenna 191.

The method performed by the network side device in the foregoing embodiment may be implemented by the baseband apparatus 193. The baseband apparatus 193 includes a baseband processor.

The baseband apparatus 193 may include, for example, at least one baseband board. A plurality of chips are arranged on the baseband board, as shown in FIG. 19. One of the chips is, for example, a baseband processor and is connected to the memory 195 through a bus interface to call a program in the memory 195 to perform the operations for the network side device shown in the foregoing method embodiments.

The network side device may further include a network interface 196. The interface is, for example, a common public radio interface (Common Public Radio Interface, CPRI).

Specifically, the network side device 190 in this embodiment of this application further includes instructions or a program stored in the memory 195 and executable on the processor 194. The processor 194 calls the instructions or the program in the memory 195 to perform the method performed by the modules shown in FIG. 15, and achieves the same technical effects. To avoid repetition, details are not described herein.

An embodiment of this application further provides a readable storage medium. The readable storage medium stores a program or instructions. The program or the instructions, when executed, cause a processor to implement the processes of the foregoing embodiments of the signal sending method or the processes of the foregoing embodiments of the signal receiving method, and can achieve the same technical effects. To avoid repetition, details are not described herein.

The processor is a processor in the terminal described in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the signal sending method or the processes of the foregoing embodiments of the signal receiving method, and can achieve the same technical effects. To avoid repetition, details are not described herein.

It should be understood that the chip mentioned in this embodiment of this application may further be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing embodiments of the signal sending method or the processes of the foregoing embodiments of the signal receiving method, and can achieve the same technical effects. To avoid repetition, details are not described herein.

An embodiment of this application further provides a communication system, including a terminal and a network side device. The terminal may be configured to perform the foregoing steps of the signal receiving method. The network side device may be configured to perform the foregoing steps of the signal sending method.

It should be noted that terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "includes a ..." does not exclude existence of additional same elements in the process, the method, the article, or the apparatus that includes the element. In addition, it should be noted that the scope of the method and the apparatus in the implementations of this application is not limited to function execution in the order shown or discussed and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the foregoing implementations, a person skilled in the art may clearly understand that the method in the foregoing embodiments may be implemented by a computer software product with a necessary universal hardware platform, or may certainly be implemented by hardware. The computer software product is stored in a storage medium (such as a ROM, a RAM, a magnetic disk, or an optical disc) and includes several instructions to enable a terminal or a network side device to perform the methods described in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A signal sending method, comprising:
sending, by a network side device, a first signal, wherein the first signal comprises at least a complex signal sequence, the complex signal sequence carries information, or the complex signal sequence and a time position of the complex signal sequence carry information, or the complex signal sequence and an on-off keying signal carry information.

2. The method according to claim 1, wherein if the first signal further comprises the on-off keying signal, the complex signal sequence is a sequence modulated on an ON symbol of the on-off keying signal (OOK ON symbol).

3. The method according to claim 1 or 2, wherein a time resource of the first signal comprises one or more first time units, the first time unit comprises one or more orthogonal frequency division multiplex OFDM symbols, or the first time unit comprises one or more on-off keying signal symbols (OOK symbols).

4. The method according to any one of claims 1 to 3, wherein the time resource of the first signal comprises a plurality of first time units; and a relationship between a bit position of information carried by a complex signal sequence in the first time unit and a bit position of information carried by a time position of the complex signal sequence or the information carried by the on-off keying signal is determined based on a position of the first time unit in the plurality of first time units.

5. The method according to any one of claims 1 to 4, wherein a number of complex signal sequences that the first signal is capable of carrying is N, one of the N complex signal sequences is sent in a second time unit, and N is an integer greater than or equal to 1; and the second time unit is any one of the following: an OFDM symbol, a partial OFDM symbol, an OOK symbol, or an ON symbol of an on-off keying signal (OOK ON symbol).

6. The method according to any one of claims 3 to 5, wherein the first time unit comprises one or more second time units, and a number of bits carried in the first time unit satisfies any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

7. The method according to any one of claims 1 to 6, further comprising:
sending, by the network side device, configuration information, wherein the configuration information is used to configure at least one of the following: the information carried by the complex signal sequence, the information carried by the complex signal sequence and the time position of the complex signal sequence, and the information carried by the complex signal sequence and the on-off keying signal.

8. The method according to any one of claims 1 to 7, wherein the first signal corresponds to a single transmission or a plurality of transmissions.

9. The method according to claim 8, wherein when the first signal corresponds to the plurality of transmissions, only part or all information of the single transmission is carried in the first time unit or the second time unit, or part or all information of the plurality of transmissions is carried in the first time unit or the second time unit.

10. The method according to any one of claims 1 to 9, wherein the complex signal sequence comprises a complex sequence determined based on at least one of the following:
an M sequence, a ZC sequence, a gold sequence, and a constant amplitude zero auto-correlation CAZAC sequence;
or
the complex signal sequence comprises a sequence determined based on a real sequence or a complex sequence generated based on at least two of the following:
an M sequence, a ZC sequence, a gold sequence, and a CAZAC sequence.

11. The method according to any one of claims 1 to 9, wherein
the complex signal sequence is generated based on a constellation point corresponding to at least one of the following modulation modes: binary phase shift keying BPSK, pi/2 BPSK, quadrature phase shift keying QPSK, 16 quadrature amplitude modulation QAM, 64QAM, 256QAM, 1024QAM, and 4096QAM.

12. The method according to any one of claims 1 to 11, wherein the first signal is a low-power signal and is received by a low-power receiver.

13. The method according to claim 12, wherein a type of the low-power receiver comprises at least one of the following:
a receiver capable of demodulating an on-off keying signal but incapable of detecting a complex signal sequence; or
a receiver capable of detecting a complex signal sequence.

14. A signal receiving method, comprising:
receiving, by a terminal, a first signal; and
determining, by the terminal based on first information, information carried by the first signal, wherein the first information comprises any one of the following: a complex signal sequence in the first signal, the complex signal sequence in the first signal and a time position of the complex signal sequence, and a complex signal sequence and an on-off keying signal in the first signal.

15. The method according to claim 14, wherein the receiving, by a terminal, a first signal comprises:
receiving, by the terminal, the first signal by using a low-power receiver.

16. The method according to claim 14 or 15, wherein a time resource of the first signal comprises a plurality of first time units, and the receiving a first signal comprises:
receiving, by the terminal, the first signal in the plurality of first time units; and
the determining, based on first information, information carried by the first signal comprises:
determining, by the terminal based on a position of the first time unit in the plurality of first time units, a first relationship between a bit position of information carried by the complex signal sequence in the first time unit and a bit position of information carried by a time position of the complex signal sequence, or determining a second relationship between the bit position of the information carried by the complex signal sequence in the first time unit and a bit position of information carried by the on-off keying signal;
determining, by the terminal based on the complex signal sequence in the first time unit and the time position of the complex signal sequence, and the first relationship, the information carried in the first time unit; or determining, based on the complex signal sequence in the first time unit and the on-off keying signal, and the second relationship, the information carried in the first time unit.

17. The method according to any one of claims 14 to 16, wherein the time resource of the first signal comprises one or more first time units, the first time unit comprises one or more second time units, and a number of bits carried in the first time unit satisfies any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

18. The method according to any one of claims 14 to 17, wherein the information carried by the complex signal sequence is load information carried by the first signal; or the information carried by the complex signal sequence comprises load information carried by the first signal, and CRC generated based on the load information;
or
the information carried by the complex signal sequence and a time position of the complex signal sequence is load information carried by the first signal; or the information carried by the complex signal sequence and the time position of the complex signal sequence comprises the load information carried by the first signal, and CRC generated based on the load information.

19. The method according to any one of claims 14 to 18, wherein the determining, by the terminal based on first information, information carried by the first signal comprises:
determining, by the terminal based on at least one of a network configuration, a protocol agreement, and a predefined rule, the information carried by the first signal based on the first information.

20. The method according to claim 14, wherein the receiving, by a terminal, a first signal comprises:
detecting, by the terminal in a second time unit, the complex signal sequence in the first signal, wherein
the determining, by the terminal based on first information, information carried by the first signal comprises any one of the following:
determining, by the terminal based on a detected complex signal sequence, an information bit carried in the second time unit;
determining, by the terminal based on the detected complex signal sequence and the time position of the complex signal sequence, an information bit carried in the second time unit; and
determining, by the terminal based on the detected complex signal sequence and the on-off keying signal, an information bit carried in the second time unit.

21. The method according to claim 20, wherein if no complex signal sequence is detected in the second time unit, no information is carried in the second time unit.

22. The method according to claim 20 or 21, wherein if no complex signal sequence is detected in the second time unit, the second time unit corresponds to an off symbol of the on-off keying signal.

23. The method according to any one of claims 14 to 22, wherein if a network side does not configure Manchester coding for the first signal, the determining, based on first information, information carried by the first signal comprises:
determining, by the terminal based on the complex signal sequence in the first signal, the information carried by the first signal;
or
if a network side configures Manchester coding for the first signal, the determining, based on first information, information carried by the first signal comprises:
determining, by the terminal based on the complex signal sequence in the first signal and the time position of the complex signal sequence, the information carried by the first signal; or determining, based on the complex signal sequence and the on-off keying signal in the first signal, the information carried by the first signal.

24. The method according to any one of claims 14 to 23, wherein if the network side does not configure the first time unit, the determining, based on first information, information carried by the first signal comprises:
determining, by the terminal based on the complex signal sequence in the first signal, the information carried by the first signal;
or
if the network side configures the first time unit, the determining, based on first information, information carried by the first signal comprises:
determining, by the terminal based on the complex signal sequence in the first signal and the time position of the complex signal sequence, the information carried by the first signal; or determining, based on the complex signal sequence and the on-off keying signal in the first signal, the information carried by the first signal.

25. The method according to any one of claims 14 to 24, wherein if the network side does not configure the on-off keying signal, the determining, based on first information, information carried by the first signal comprises:
determining, by the terminal based on the complex signal sequence in the first signal, the information carried by the first signal;
or
if the network side configures the on-off keying signal, the determining, based on first information, information carried by the first signal comprises:
determining, by the terminal based on the complex signal sequence in the first signal and the time position of the complex signal sequence, the information carried by the first signal; or determining, based on the complex signal sequence and the on-off keying signal in the first signal, the information carried by the first signal.

26. A signal sending apparatus, comprising:
a first sending module, configured to send a first signal, wherein the first signal comprises at least a complex signal sequence, the complex signal sequence carries information, or the complex signal sequence and a time position of the complex signal sequence carry information, or the complex signal sequence and an on-off keying signal carry information.

27. The apparatus according to claim 26, wherein a time resource of the first signal comprises one or more first time units, the first time unit comprises one or more orthogonal frequency division multiplex OFDM symbols, or the first time unit comprises one or more OOK symbols.

28. The apparatus according to claim 26 or 27, wherein the time resource of the first signal comprises a plurality of first time units; and a relationship between a bit position of information carried by a complex signal sequence in the first time unit and a bit position of information carried by a time position of the complex signal sequence or the information carried by the on-off keying signal is determined based on a position of the first time unit in the plurality of first time units.

29. The apparatus according to claim 27 or 28, wherein the first time unit comprises one or more second time units, and a number of bits carried in the first time unit satisfies any one of the following:
being determined based on a number of bits carried in the one or more second time units;
being determined based on the following content: a number of bits carried in the one or more second time units, or a number of bits determined based on a time position of the second time unit or a time position of a complex signal sequence in the second time unit; or
being determined based on the following content: a number of bits carried in the one or more second time units, and a number of bits carried by the OOK symbol in the first time unit.

30. A signal receiving apparatus, comprising:
a receiving module, configured to receive a first signal; and
a determining module, configured to determine, based on first information, information carried by the first signal, wherein the first information comprises any one of the following: a complex signal sequence in the first signal, the complex signal sequence in the first signal and a time position of the complex signal sequence, and a complex signal sequence and an on-off keying signal in the first signal.

31. The apparatus according to claim 30, wherein the time resource of the first signal comprises a plurality of first time units;
the receiving module is specifically configured to receive the first signal in the plurality of first time units; and
the determining module is specifically configured to: based on a position of the first time unit in the plurality of first time units, determine a first relationship between a bit position of information carried by the complex signal sequence in the first time unit and a bit position of information carried by a time position of the complex signal sequence, or determine a second relationship between the bit position of the information carried by the complex signal sequence in the first time unit and a bit position of information carried by the on-off keying signal; and determine, based on the complex signal sequence in the first time unit and the time position of the complex signal sequence, and the first relationship, the information carried in the first time unit; or determine, based on the complex signal sequence in the first time unit and the on-off keying signal, and the second relationship, the information carried in the first time unit.

32. The apparatus according to claim 30, wherein the receiving module is specifically configured to detect, in a second time unit, a complex signal sequence in the first signal; and
the determining module is specifically configured to:
determine, based on a detected complex signal sequence, an information bit carried in the second time unit;
determine, based on the detected complex signal sequence and the time position of the complex signal sequence, an information bit carried in the second time unit; and
determine, based on the detected complex signal sequence and the on-off keying signal, an information bit carried in the second time unit.

33. A network side device, comprising a processor and a memory, wherein the memory stores a program or instructions executable on the processor, and the program or the instructions, when executed by the processor, implement the steps of the signal sending method according to any one of claims 1 to 13.

34. A terminal, comprising a processor and a memory, wherein the memory stores a program or instructions executable on the processor, and the program or instructions, when executed by the processor, implement the steps of the signal receiving method according to any one of claims 14 to 25.

35. A readable storage medium, wherein the readable storage medium stores a program or instructions, and the program or instructions, when executed by a processor, implement the steps of the signal sending method according to any one of claims 1 to 13, or the steps of the signal receiving method according to any one of claims 14 to 25.
